# FASCICULE DE BREVET EUROPEEN

(11) **EP 0 493 188 B1**
(45) Date de publication et mention de la délivrance du brevet: **26.04.1995**
(21) Numéro de dépôt: 91403419.4
(22) Date de dépôt: 17.12.1991
(51) Int. Cl.: H01R 4/72

(54) **Manchon thermorétractable à nappe de fils métalliques**
Wärmeschrumpfbare Hülse mit metallischem Drahtgewebe
Heat shrinking sleeve with metallic wire fabric

(30) Priorité: 18.12.1990 FR 9015826
(43) Date de publication de la demande: 01.07.1992
(73) Titulaire: SOCIETE INDUSTRIELLE DE LIAISONS ELECTRIQUES - SILEC, F-75008 Paris (FR)
(72) Inventeur: Arette Hourquet, Damien, F-77130 Cannes Ecluse (FR)
(74) Mandataire: Fruchard, Guy

(56) Documents cités:
- DE-A- 2 413 734
- DE-A- 2 841 143
- DE-A- 3 635 204

## Description

La présente invention concerne un manchon thermorétractable à nappe de fils métalliques.

On connaît des manchons thermorétractables comportant une ou plusieurs couches en matériaux souples ou relativement souples à base de matières synthétiques, élastomères ou plastomères et élastomères, utilisées en particulier en électrotechnique, chaque couche étant dopée avec des composants appropriés pour rendre la couche conductrice de l'électricité, isolante, à haute permittivité ou adhésive selon l'application souhaitée.

Toutefois, les compositions connues, même lorsqu'elles sont conductrices de l'électricité, ne permettent pas de faire passer des courants importants tels que des courants de phases, des courants de terre, des courants capacitifs ou des courants de court-circuits.

On connaît également du document FR-A-2 222 778 un manchon thermorétractable comportant une tresse tubulaire de fils conducteurs disposée à l'intérieur du manchon pour assurer la liaison électrique du conducteur extérieur de deux câbles coaxiaux. En raison de la structure tressée des fils conducteurs une déformation radiale du manchon provoque également une déformation axiale de celui-ci. En particulier lorsqu'on dilate le manchon dans son ensemble la tresse tubulaire a tendance à se raccourcir axialement. Ceci ne présente pas d'inconvénient majeur pour des manchons de faibles dimensions, tels que ceux qui sont utilisés en liaison avec des câbles coaxiaux, car le manchon peut être chauffé de façon uniforme et la faible variation de longueur axiale est sans incidence sur le raccordement.

En revanche une telle structure est incompatible avec les manchons de grandes dimensions qui sont utilisés pour les câbles de transport d'énergie électrique. Dans ce cas la variation axiale de longueur peut en effet atteindre plusieurs centimètres, mais surtout il est pratiquement impossible de réaliser un chauffage homogène de l'ensemble du manchon de sorte que les parties froides du manchon assurent un verrouillage du déplacement des fils conducteurs et forment une armature rigide qui empêche une rétraction satisfaisante du manchon.

Un but de l'invention est de proposer un manchon thermorétractable à couche conductrice dont le fonctionnement soit satisfaisant quelles que soient les dimensions du manchon.

Selon l'invention, on prévoit un manchon thermorétractable comportant au moins une couche de matériau thermorétractable et une nappe de fils métalliques disposée à l'intérieur de la couche de matériau thermorétractable caractérisé en ce que la nappe de fils métalliques est formée de fils tricotés ou de segments de fils assemblés selon une structure non tissée.

Ainsi, lors de la rétraction du manchon thermorétractable, la déformation radiale du manchon ne provoque pratiquement aucune déformation axiale, de sorte que le manchon se rétracte convenablement quelles que soient ses dimensions et même si le chauffage du manchon n'est pas effectué de façon homogène.

Selon une version avantageuse de l'invention, la nappe de fils métalliques est fixée à la couche de matériau thermorétractable par une couche de colle ou de mastic. Ainsi on évite un déplacement de la nappe de fils métalliques lors de la manipulation du manchon et on assure une étanchéité lors de la rétraction du manchon par fluage de la colle ou du mastic à travers la nappe de fils métalliques.

Selon un aspect avantageux de l'invention, on prévoit au moins un organe de séparation sensiblement étanche à la colle ou au mastic disposé entre la couche de colle ou de mastic et la nappe de fils métalliques. De préférence on prévoit deux organes de séparation disposés au voisinage des extrémités de la nappe de fils métalliques. Ainsi on obtient une zone ou plusieurs zones dans lesquelles les fils métalliques ne sont pas enrobés de colle ou de mastic lors de la rétraction et où l'on obtient donc un meilleur contact avec les parties en regard des câbles sur lesquels le manchon est appliqué. Cette disposition est particulièrement utile pour assurer une continuité du blindage de deux câbles au niveau d'une jonction de câbles.

Selon encore un aspect avantageux de l'invention la couche de colle ou de mastic a des extrémités en retrait par rapport à la couche de matériau thermorétractable. Ainsi on évite que de la colle ou du mastic ne déborde du manchon lors de la rétraction.

Selon un mode de réalisation préféré, la nappe de fils métalliques a des extrémités en retrait par rapport à la couche de colle ou de mastic. Cette disposition est particulièrement utile pour assurer une bonne étanchéité lorsque des organes de séparation sont prévus entre la couche de colle ou de mastic et la nappe de fils métalliques, en particulier aux extrémités de la nappe de fils métalliques.

D'autres caractéristiques et avantages de l'invention ressortiront à la lecture de la description qui suit d'un mode de réalisation particulier non limitatif de l'invention en liaison avec les dessins ci-joints parmi lesquels :
- la figure 1 est une vue en perspective partielle, partiellement en coupe, d'un mode de réalisation du manchon selon l'invention dans un état dilaté.
- la figure 2 est une vue en perspective partiellement en coupe, d'un dispositif servant à la réalisation du manchon selon l'invention,

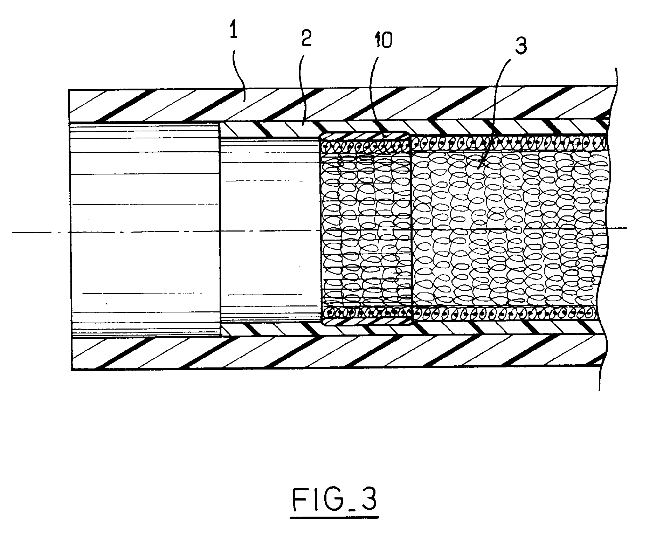

- la figure 3 est une vue partielle en coupe axiale du manchon selon l'invention.

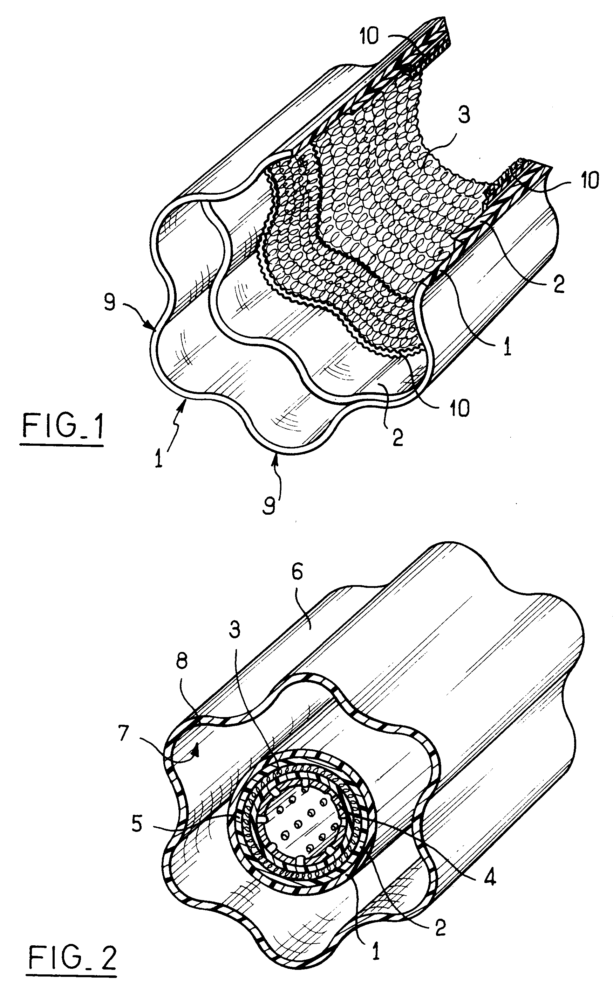

En référence aux figures, le manchon selon l'invention est par exemple un manchon multicouches comportant une couche de matériau thermorétractable 1, qui, dans un état non dilaté représenté sur la figure 2, a une forme généralement cylindrique. A l'intérieur de la couche de matériau thermorétractable, le manchon comporte une couche de colle ou de mastic 2 dont les extrémités sont en retrait par rapport aux bords du manchon en matière thermorétractable. A l'intérieur de la couche de colle ou de mastic, le manchon comporte une couche la plus interne formée d'une nappe de fils métalliques 3 fixée à la couche immédiatement adjacente. La nappe de fils métalliques 3 est par exemple réalisée par un tricot métallique tubulaire ou une nappe de segments de fil métallique assemblés selon une structure non tissée, par exemple par aiguilletage. Les segments de fil métallique ont une longueur adaptée aux dimensions générales du manchon pour donner à la nappe de fils métalliques une cohérence suffisante sans réaliser un obstacle à la rétraction lors du chauffage du matériau thermorétractable. D'une façon générale les segments de fil métallique auront donc une longueur variant de quelques centimètres à quelques dizaines de centimètres sans que cette indication doive être considérée comme limitative.

Dans l'exemple de réalisation illustré, la nappe de fils métalliques 3 a un bord en retrait par rapport au bord de la couche de colle 2 de sorte que la couche de colle ou de mastic 2 a un bord s'étendant entre le bord de la nappe de fils métalliques et le bord du manchon thermorétractable comme représenté sur la figure 1.

Des organes de séparation 10 sensiblement étanches à la colle ou au mastic, par exemple des segments de papier crêpé, sont disposés entre la couche de colle ou de mastic 2 et la nappe de fils métalliques 3 au voisinage des extrémités de la nappe de fils métalliques, c'est-à-dire dans la zone où il est habituellement prévu d'assurer un contact entre la nappe de fils métalliques et le blindage d'un câble.

En pratique, on peut réaliser le manchon thermorétractable selon l'invention à partir d'un tube perforé cylindrique 4 recouvert d'une couche de matériau souple, élastique, antiadhésif 5, sur laquelle on dispose la nappe de fils métalliques 3 enduite de colle ou recouverte de mastic pour former la couche de colle ou de mastic 2 sur laquelle on extrude la couche de matériau à propriété thermorétractable 1.

Dans le cas où l'on utilise des organes de séparation 10, ceux-ci sont bien entendu mis en place sur la nappe de fils métalliques avant de l'enduire de colle ou de mastic. L'ensemble des couches est soumis à une opération de réticulation ou toute opération donnant au matériau une structure thermorétractable, seuls le ou les produits réticulables étant modifiés. L'ensemble est ensuite dilaté par mise en pression du tube perforé 4 jusqu'à ce que le manchon thermorétractable 1 soit en contact avec la surface interne 7 de l'organe de formage 6. L'ensemble est refroidi à l'état dilaté et le tube 4 est mis hors pression de sorte que la couche de matériau souple, élastique, anti-adhésif 5 revient à sa position initiale et le manchon thermorétractable dans l'état dilaté tel qu'illustré à la figure 1 est sorti de l'organe de formage 6. Sous l'effet de la pression, l'ensemble des couches a adopté la forme des circonvolutions 8 de la surface interne de l'organe de formage 6 de sorte qu'à l'état dilaté le manchon thermorétractable 1 comporte les circonvolutions 9 qui résultent des déformations de sa paroi et apparaîssent à sa surface externe.

La mise en oeuvre du manchon thermorétractable selon l'invention est semblable à celle des gaines thermorétractables habituelles, c'est-à-dire qu'après avoir choisi un manchon adapté aux dimensions de l'objet à protéger en fonction du rapport de rétraction de ce manchon, celui-ci est mis en place et est chauffé au moyen d'un chalumeau à flamme peu chaude ou d'un chalumeau à air chaud. La rétraction est complète lorsque les déformations externes ont complètement disparu. A ce propos on remarquera que la présence de la couche métallique, bonne conductrice de la chaleur, assure une excellente répartition de la chaleur au moment de la rétraction et donc une grande homogénéité de celle-ci.

Dans le cas d'un raccordement de câbles, la couche métallique est de préférence disposée pour venir en contact avec l'écran métallique des câbles de part et d'autre de la jonction afin d'assurer une continuité électrique entre les écrans de câbles des deux câbles réunis. On remarquera que la nappe de fils métalliques est susceptible de transporter des courants électriques importants tels que des courants de terre ou des courants capacitifs, ou même des courants de phases ou des courants de court-circuits.

Bien entendu l'invention n'est pas limitée au mode de réalisation décrit et on peut y apporter des variantes de réalisation. En particulier, la nappe de fils métalliques peut être mise en place à l'intérieur d'un manchon thermorétractable déjà dilaté, que ce manchon thermorétractable comporte des circonvolutions comme décrit ci-dessus ou qu'il soit tout simplement dilaté dans un état cylindrique. On peut utiliser différents procédés pour disposer la nappe de fils métalliques à l'intérieur du manchon thermorétractable. Par exemple, on recouvre la couche de matériau souple et élastique anti-adhésif 5 avec une nappe de fils métalliques, puis on enduit cette nappe d'une couche de colle ou on extrude une couche de mastic. Le tube perforé ainsi recouvert est engagé dans un manchon thermorétractable en état dilaté et, par l'action d'un fluide sous pression introduit à l'intérieur du tube perforé, la nappe de fils métalliques est plaquée à l'intérieur du manchon rétractable à laquelle elle adhère. Le fluide sous pression est maintenu quelques instants afin d'assurer une bonne liaison entre les éléments dilatés et le manchon thermorétractable. On remarquera que le manchon thermorétractable selon l'invention assure non seulement une continuité électrique entre des éléments espacés réunis par la nappe de fils métalliques mais assure également une protection contre les agressions extérieures.

Bien que l'invention ait été illustrée en relation avec un manchon thermorétractable tricouches comportant une couche de matériau thermorétractable, une couche de colle ou de mastic et une nappe de fils métalliques, le mastic étant particulièrement utile lorsque l'étanchéité longitudinale est recherchée, on pourra bien entendu augmenter le nombre de couches en ajoutant par exemple une couche semi-conductrice, ou une couche isolante, ou une couche à haute permittivité destinée en particulier à réduire les contraintes électriques dans les raccordements entre des câbles de transport d'électricité, les différentes couches ayant leurs extrémités en coïncidence ou décalées les unes par rapport aux autres selon l'application recherchée.

On remarquera enfin que la nappe de fils métalliques n'est pas nécessairement la couche la plus interne d'un manchon multicouches, en particulier lorsque la nappe de fils métalliques est destinée à assurer une liaison entre deux blindages de câbles dans une jonction.

Bien que le manchon selon l'invention ait été illustré avec une couche de colle ou de mastic ayant des extrémités en retrait par rapport aux extrémités du manchon, on peut également réaliser des manchons dont la couche de colle ou de mastic s'étend jusqu'aux extrémités du manchon.

## Revendications

1. Manchon thermorétractable comportant au moins une couche de matériau thermorétractable (1) et une nappe de fils métalliques (3) disposée à l'intérieur de la couche de matériau thermorétractable (1), caractérisé en ce que la nappe de fils métalliques (3) est formée de fils tricotés ou de segments de fils assemblés selon une structure non tissée.

2. Manchon thermorétractable selon la revendication 1 caractérisé en ce que la nappe de fils métalliques (3) est fixée à la couche de matériau thermorétractable (1) par une couche de colle ou de mastic (2).

3. Manchon thermorétractable selon la revendication 2 caractérisé en ce qu'il comporte au moins un organe de séparation (10) sensiblement étanche à la colle ou au mastic disposé entre la couche de colle ou de mastic (2) et la nappe de fils métalliques (3).

4. Manchon thermorétractable selon la revendication 3 caractérisé en ce qu'il comporte deux organes de séparation (10) disposés au voisinage des extrémités de la nappe de fils métalliques (3).

5. Manchon thermorétractable selon l'une des revendications 2 à 4 caractérisé en ce que la couche de colle ou de mastic (2) a des extrémités en retrait par rapport à la couche de matériau thermorétractable (1).

6. Manchon thermorétractable selon l'une des revendications 2 à 5 caractérisé en ce que la nappe de fils métalliques (3) a des extrémités en retrait par rapport à la couche de colle ou de mastic (2).

## Patentansprüche

1. Wärmeschrumpfbare Hülse mit zumindest einer Schicht (1) aus wärmeschrumpfbarem Material und mit einer Metalldrahteinlage (3), die an der Innenseite der Schicht (1) aus wärmeschrumpfbarem Material angeordnet ist, dadurch gekennzeichnet, daß die Metalldrahteinlage (3) aus gewirkten Drähten oder aus Drahtsegmenten, die gemäß einer nichtgewebten Struktur verbunden sind, gebildet ist.

2. Wärmeschrumpfbare Hülse nach Anspruch 1, dadurch gekennzeichnet, daß die Metalldrahteinlage (3) durch eine Klebstoff- oder Mastixschicht (2) an der Schicht (1) aus wärmeschrumpfbarem Material befestigt ist.

3. Wärmeschrumpfbare Hülse nach Anspruch 2, gekennzeichnet durch ein zwischen der Klebstoff- oder Mastixschicht (2) und der Metalldrahteinlage (3) angeordnetes Trennelement (10), das für den Klebstoff oder den Mastix im wesentlichen undurchlässig ist.

4. Wärmeschrumpfbare Hülse nach Anspruch 3, gekennzeichnet durch zwei Trennelemente (10), die nahe den Enden der Metalldrahteinlage (3) angeordnet sind.

5. Wärmeschrumpfbare Hülse nach einem der Ansprüche 2 bis 4, dadurch gekennzeichnet, daß die Klebstoff- oder Mastixschicht (2) in bezug auf die Schicht (1) aus wärmeschrumpfbarem Material zurückgesetzte Enden hat.

6. Wärmeschrumpfbare Hülse nach einem der Ansprüche 2 bis 5, dadurch gekennzeichnet, daß die Metalldrahteinlage (3) in bezug auf die Klebstoff- oder Mastixschicht (2) zurückgesetzte Enden hat.

## Claims

1. A heat-shrinkable sleeve comprising at least one layer of heat-shrinkable material (1) and a sheet of metal wires (3) which is disposed in the interior of the layer of heat-shrinkable material (1) characterised in that the sheet of metal wires (3) is formed from knitted wires or segments of wires which are assembled in accordance with a non-woven structure.

2. A heat-shrinkable sleeve according to claim 1 characterised in that the sheet of metal wires (3) is fixed to the layer of heat-shrinkable material (1) by a layer of glue or mastic (2).

3. A heat-shrinkable sleeve according to claim 2 characterised in that it comprises at least one separating member (10) which is substantially sealing in relation to the glue or the mastic and which is disposed between the layer of glue or mastic (2) and the sheet of metal wires (3).

4. A heat-shrinkable sleeve according to claim 3 characterised in that it comprises two separating members (10) which are disposed in the vicinity of the ends of the sheet of metal wires (3).

5. A heat-shrinkable sleeve according to one of claims 2 to 4 characterised in that the layer of glue or mastic (2) has ends set back with respect to the layer of heat-shrinkable material (1).

6. A heat-shrinkable sleeve according to one of claims 2 to 5 characterised in that the sheet of metal wires (3) has ends set back with respect to the layer of glue or mastic (2).
